# FASCICULE DE BREVET EUROPEEN

(11) **EP 3 286 147 B1**
(45) Date de publication et mention de la délivrance du brevet: **06.11.2024**
(21) Numéro de dépôt: 16723429.3
(22) Date de dépôt: 22.04.2016
(51) Int. Cl.: C02F 3/04, C02F 3/20, C02F 3/30, C02F 103/00

(54) **DISPOSITIF D'EPURATION D'EAUX USEES ET PROCÉDÉ DE TRAITEMENT D'EAU**
ABWASSERREINIGUNGSVORRICHTUNG UND WASSERAUFBEREITUNGSPROZESS
WASTEWATER PURIFICATION DEVICE AND WATER TREATMENT PROCESS

(30) Priorité: 24.04.2015 FR 1553702
(43) Date de publication de la demande: 28.02.2018
(73) Titulaire: SAVEA, 69630 Chaponost (FR); Naturally Wallace Consulting LLC, Raleigh, NC 27624 (US); Rietland BVBA, 2322 Minderhout (BE)
(72) Inventeur: TROESCH, Stéphane, 84000 Avignon (FR); DIRK, Esser, 73370 La Chapelle du Mont du Chat (FR); WALLACE, Scott, Raleigh, North Carolina 27624 (US); VAN OIRSCHOT, Dion, 2322 Minderhout (BE)
(74) Mandataire: Cabinet Becker et Associés
(86) Numéro de dépôt international: PCT/FR2016/050945
(87) Numéro de publication internationale: WO 2016/170279

(56) Documents cités:
- EP-A1- 2 213 629
- WO-A1-2016/110657
- DE-A1- 4 119 835
- DE-U1- 20 221 682
- ES-A1- 2 370 878
- FR-A1- 2 833 254
- FR-A1- 2 913 418
- FR-A1- 2 973 796
- US-A- 6 126 827
- US-B1- 6 406 627
- US-B2- 6 652 743

## Description

Le domaine de la présente invention est celui du traitement des eaux usées, notamment des petites et moyennes collectivités. Plus particulièrement, l'invention concerne un dispositif d'épuration des eaux usées permettant de favoriser la minéralisation des boues s'accumulant en surface dudit dispositif et/ou l'abattement de la pollution dissoute et plus particulièrement le traitement de l'azote par nitrification-dénitrification. L'invention concerne également des procédé d'épuration mettant en oeuvre un tel dispositif, et notamment un procédé de minéralisation des boues.

D'une manière générale, l'assainissement des eaux usées s'entend de l'ensemble des techniques destinées à collecter les eaux usées, les évacuer et les traiter pour réduire les pollutions jusqu'à un niveau acceptable par le milieu récepteur. Plusieurs polluants sont généralement ciblés, parmi lesquels les matières en suspension, principalement responsables de l'aspect trouble ou de la turbidité des eaux usées ; les matières oxydables, notamment les matières organiques oxydables, qui consomment l'oxygène dissous dans l'eau et peuvent provoquer une asphyxie des organismes vivants ; les composés azotés responsables, avec les matières phosphorées, de l'eutrophisation des plans d'eau. Aussi, le traitement des eaux usées nécessite une série d'étapes successives dont chacune vise principalement un type de polluant particulier.

Pour cela, la majorité des dispositifs de traitement des eaux usées par filtres plantés de roseaux actuellement mis en oeuvre sont constitués essentiellement de deux filtres distincts fonctionnant en série et alimentés par bâchée, constituant respectivement un premier et un deuxième étage de traitement. Le premier étage de traitement permet principalement de retenir la fraction décantable de la pollution, les matières en suspension, de nature organique et minérale, en surface du filtre. Le deuxième étage de traitement vise plus particulièrement à réduire la pollution sous forme dissoute ou colloïdale. Le deuxième étage permet principalement de dégrader la pollution organique et ammoniacale dissoute, d'une part en des fractions oxydées aboutissant via le métabolisme bactérien en conditions aérobies à la production de CO₂ et H2O (matière organique) et de nitrates, et d'autre part, en une fraction comprenant de nouvelles cellules bactériennes, habituellement dénommées boues d'épuration. Un troisième étage de traitement peut, dans certains cas, être mis en oeuvre pour éliminer les nitrates, avant le rejet des effluents traités dans l'environnement. L'élimination de l'azote global est généralement réalisée par des étapes de nitrification-dénitrification lors desquelles l'azote organique présent dans les eaux usées est transformé en azote ammoniacal (NH₄ ⁺) puis en nitrites, nitrates et azote gazeux (N2) au cours d'une succession d'étapes se caractérisant par des conditions de disponibilité en oxygène différentes. L'étape de nitrification, en milieu aérobie, consiste en l'oxydation de l'azote ammoniacal en nitrites NO₂⁻ puis en nitrates NO₃⁻, sous l'influence de bactéries nitreuses et nitriques. L'étape de dénitrification, sous l'action de bactéries dénitrifiantes hétérotrophes en milieu anoxique, réduit les nitrates en azote gazeux N₂, qui s'échappe alors dans l'atmosphère. Le plus souvent, du fait des différences de conditions environnementales nécessaires à leur bon déroulement, les étapes de nitrification et de dénitrification sont réalisées dans des installations distinctes.

La multiplication des étapes de traitement des eaux usées nécessaires pour aboutir au niveau de dépollution requis par les normes environnementales conduit à une multiplication des étapes de traitement, notamment si le traitement de l'azote global est visé. Il s'en suit une augmentation de la surface au sol dédiée au traitement des eaux, ce qui impacte le coût d'installation et dans une moindre mesure le coût de gestion des stations d'épuration. En outre, en fonction de la nature du terrain (présence de dénivelés importants, zones côtières, etc.) de telles installations peuvent être difficiles à implanter.

FR2833254 décrit un dispositif comprenant plusieurs modules indépendants disposés en parallèle, un système d'aération forcée et un collecteur unique, recueillant l'ensemble des eaux de percolation.

WO2016/110657 décrit un dispositif comprenant plusieurs bassins en parallèle et un système d'aération forcée, lesdits bassins étant indépendants et destinés à fonctionner chacun leur tour.

FR2973796 décrit un dispositif de traitement des eaux usées comprenant une couche supérieure et une couche intermédiaire, toutes deux non saturées et en condition aérobies, et une couche inférieure, saturée, en condition anoxique.

Il est donc de plus en plus nécessaire de pouvoir réduire l'encombrement général des installations dédiées au traitement des eaux usées, sans impacter le niveau de dépollution final.

En travaillant sur les problématiques d'encombrement des stations d'épuration pour les collectivités, les inventeurs ont découvert qu'il est possible d'accélérer la minéralisation des boues s'accumulant en surface du premier étage de traitement, recevant les eaux usées brutes, en augmentant l'apport en oxygène au moyen d'un système d'aération forcée. En outre, ils sont parvenus à réduire considérablement l'encombrement général du dispositif de traitement des eaux usées en plaçant le deuxième étage de traitement directement au-dessous du premier étage de traitement. Ce faisant, les inventeurs ont mis au point un dispositif de traitement des eaux usées dans lequel le système d'aération forcée, disposé au fond dudit dispositif, permet d'apporter de l'oxygène aux deux étages de traitement superposés. Dans le dispositif selon l'invention, l'apport en oxygène au niveau du deuxième étage, ou étage inférieur, permet d'assurer des conditions d'oxygénation nécessaires et suffisantes à un traitement poussé de la pollution dissoute ainsi qu'à la nitrification complète ou quasi-complète de l'azote ; tandis que l'oxygène remontant en surface favorise la minéralisation des boues qui s'accumulent en surface du filtre planté. En outre, la configuration du dispositif de traitement selon l'invention permet d'alterner les phases aérobies et anoxiques dans le ou les filtres du deuxième étage, et permet ainsi la dénitrification des nitrates. Avantageusement, les populations bactériennes dénitrifiantes sont de type facultatives c'est-à-dire aptes à passer d'une respiration à une autre, afin de pouvoir, lorsque l'O₂ est insuffisant, utiliser l'oxygène des nitrates (NO₃). La bactéries nitrifiantes quant à elles ne sont pas impactées par les conditions anoxiques. Ainsi, les bactéries nitrifiantes et dénitrifiantes peuvent être maintenues au sein du second étage, quelles que soient les conditions (aérobies, anoxiques) au sein dudit second étage. Le dispositif de traitement des eaux usées selon l'invention permet donc, au sein d'une seule et même structure, de mettre en oeuvre l'ensemble des étapes de traitement, qui normalement s'effectuent dans des structures différentes. Les inventeurs ont également mis en exergue que l'utilisation d'un système d'aération forcée dans un dispositif de traitement des eaux usées comprenant un étage à écoulement horizontal participe à l'élimination au moins partielle des germes pathogènes potentiellement présents dans l'effluent à traiter. Cette étape d'élimination de germes pathogènes est particulièrement intéressante dans le cadre du traitement des eaux usées avec le dispositif selon l'invention, puisque la présence du second étage au niveau duquel l'écoulement est au moins partiellement horizontal combinée à l'aération forcée favorise l'élimination de ces germes pathogènes.

L'invention a donc pour objet un dispositif d'épuration d'eaux usées de type massif filtrant selon la revendication 1.

L'invention a également pour objet un procédé de traitement des eaux usées, selon la revendication 5, mettant en oeuvre

le dispositif d'épuration des eaux usées de l'invention.

Des modes de réalisation préférés du dispositif et procédé de l'invention sont décrits dans les revendications dépendantes.

Bien entendu, il est possible d'obtenir un début de dégradation aérobie de la pollution dissoute au niveau de la culture fixée du premier étage. Cependant, la dégradation, et notamment la nitrification, se produit majoritairement au niveau du second étage.

Le dispositif selon l'invention est notamment adapté au traitement des eaux usées provenant des petites et moyennes agglomérations, c'est-à-dire des collectivités de moins de 10 000 équivalents habitants (EH), et le plus souvent, de 50 à 2 000 EH. Bien entendu, le dispositif selon l'invention peut également servir au traitement des eaux usées provenant d'agglomérations plus importantes, ainsi qu'au traitement des eaux usées industrielles, des eaux pluviales, des effluents agroalimentaires, etc....

Selon l'invention, le dispositif comprend successivement, dans la hauteur, un premier étage planté et librement drainé, un second étage saturé en eau et un fond recevant le système d'aération forcée. Dans le contexte de l'invention, l'épaisseur, ou hauteur, s'entend de la dimension s'étendant sensiblement verticalement par rapport à une surface sur laquelle repose le dispositif. Ainsi, lorsque le dispositif est alimenté en effluent, l'eau percole à travers le premier étage, puis rejoint le second étage, ou étage inférieur, avant d'être évacué par le fond hors du dispositif.

Le système d'aération forcée, lui, est apte à injecter de l'air depuis le fond du dispositif, de telle sorte que l'oxygène traverse le second étage avant de rejoindre le premier étage, puis l'air libre. Dans un mode de réalisation particulier, le système d'aération permet d'injecter entre 100 et 300 g O₂/m²/jour. D'une manière générale, l'homme du métier sait adapter le débit aux performances souhaitées.

Le premier étage, ou étage supérieur, consiste en au moins un filtre planté, préférentiellement de macrophytes, et plus préférentiellement de roseaux, comprenant avantageusement des supports fins. Le premier étage peut avantageusement comprendre deux ou plus filtres en parallèles, qui pourront, de manière classique, être alimentés en alternance.

Dans un mode de réalisation particulier, le premier étage présente une épaisseur, ou hauteur, préférentiellement comprise entre 10 et 50 cm. De manière classique, le premier étage peut comporter une couche de matériau particulaire filtrante, tel que du gravier de granulométrie comprise entre 2 et 8 mm, ou entre 2 et 4 mm, une couche de pouzzolane de granulométrie comprise entre 2 et 8 mm, ou tout autre support de fixation adapté. Le choix du matériau particulaire est à la portée de l'homme du métier.

D'une manière générale, le premier étage du dispositif selon l'invention est apte à recevoir de l'effluent brut, préférentiellement de l'effluent brut dégrillé, c'est-à-dire simplement débarrassé des macro-déchets.

Selon l'invention, le premier étage est librement drainé, de sorte qu'à l'arrivée d'une bâchée d'effluent, l'eau se répartit à la surface du filtre alimenté, puis y percole verticalement de manière uniforme en direction du fond. Des boues s'accumulent à la surface du filtre. L'apport en oxygène depuis le fond du dispositif grâce au système d'aération forcée permet d'optimiser la minéralisation des boues, en CO₂, H₂O, sel, etc. Le dispositif selon l'invention permet ainsi de réduire, voire de supprimer, les risques de colmatage. Il est ainsi possible, selon l'invention, d'appliquer des charges plus importantes que dans un premier étage classique, et/ou de d'augmenter la phase d'alimentation d'un filtre. Par exemple, alors qu'un premier étage classique est généralement dimensionné à 300g DCO/m²/jour par rapport à la surface du filtre en opération, il est possible avec le dispositif selon l'invention, d'augmenter la charge surfacique appliquée au filtre du premier étage à des valeurs nettement supérieures, notamment au moins égales à 600g DCO/m²/jour (DCO : demande chimique en oxygène).

L'eau percolant à travers le premier étage pour rejoindre le second étage subit avantageusement un début de traitement des pollutions dissoutes par la biomasse bactérienne aérobie fixée sur les supports.

Le second étage, ou étage inférieur, est disposé directement sous le premier étage. Autrement dit, la culture fixée du premier étage repose sur la culture fixée du second étage.

Avantageusement, le second étage présente une épaisseur, ou hauteur, comprise entre 100 et 200 cm. Selon l'invention, le second étage peut comporter une couche de matériau particulaire filtrante, tel que du gravier ou de la pouzzolane, de granulométrie préférentiellement comprise entre 8 et 16 mm, ou entre 10 et 20 mm, ou entre 20 et 40 mm, ou entre 30 et 60 mm. Le choix du matériau particulaire est à la portée de l'homme du métier.

Le second étage est destiné à être saturé en eau, de sorte que des moyens de mise en charge sont prévus pour assurer le maintien à niveau. Il est prévu un écoulement vertical et horizontal au sein du second étage. Dans un mode de réalisation particulier, le second étage comprend deux ou plus de deux filtres en parallèle, qui pourront fonctionner en alternance. Avantageusement, sel l'invention, lorsque le second étage comprend au moins deux filtres, l'eau percolant verticalement au sein d'un des filtres percole ensuite horizontalement au sein de tout ou partie des filtres adjacents. Une telle configuration est particulièrement avantageuse puisqu'elle favorise l'élimination des germes pathogènes susceptibles d'être présents dans l'effluent à traiter.

Selon l'invention, l'eau percolant depuis le premier étage arrive dans le second étage. Le traitement biologique des pollutions dissoutes est favorisé par l'apport en oxygène depuis le fond du dispositif. Avantageusement, les conditions d'oxygénation grâce au système d'aération forcée sont telles qu'il est possible d'obtenir une nitrification importante voir complète de l'azote. Par nitrification, on entend l'oxydation de l'azote ammoniacal en nitrite puis en nitrate par des bactéries nitrifiantes. Par exemple, l'oxygénation au sein du second étage peut être supérieure à 10 mg O₂/L, dans la limite de la concentration d'O₂ à saturation (fonction de la température et de salinité de l'eau), mais est préférentiellement comprise entre plus de 0 et 5 mg O₂/L.

Le système d'aération forcée est apte à fonctionner de manière discontinue au sein d'un filtre. Il est alors possible d'alterner les conditions aérobies et anoxiques au sein d'un filtre considéré. Dans un mode de réalisation particulier, le second étage comprend un unique filtre alimenté de manière séquentielle par le système d'aération forcée. Ainsi, après une phase aérobie lors de laquelle l'azote subit une nitrification, il est possible d'obtenir une phase anoxique propice à la dénitrification. Par dénitrification, on entend la dénitrification des nitrates en azote moléculaire par des bactéries dénitirifiantes. Ainsi, lorsque le système d'aération forcée fonctionne de manière alternative ou séquentielle, de manière à alterner les conditions aérobies et anoxiques au sein du second étage, on obtient une phase (D) de dénitrification au niveau du second étage en conditions anoxiques et avantageusement non limitantes en carbone, avant la phase (C) d'évacuation. On obtient ainsi un traitement de l'azote global au sein d'un même filtre.

Selon l'invention, le second étage comprend au moins deux filtres en parallèle.

Les filtres sont alimentés en oxygène de manière alternative par le système d'aération forcée. Lorsqu'un filtre du second étage est alimenté en oxygène par le système d'aération forcée, un autre filtre du second étage n'est pas alimenté de manière à créer des conditions anoxiques, et inversement. On peut ainsi obtenir une phase (D) de dénitrification au niveau du filtre du second étage en conditions anoxiques. Pour cela, l'eau est avantageusement forcée à percoler horizontalement du filtre en aérobie vers le filtre en anaérobie au travers du massif de gravier support de la culture fixée dénitrifiante. Ainsi, il est possible d'obtenir une nitrification dans le filtre en aérobie, suivie d'une dénitrification dans le filtre en anaérobie, ou anoxie.

Le système d'aération forcée selon l'invention est disposé sur le fond du dispositif, sous le second étage. Il peut alors alimenter en oxygène le second étage puis, via l'oxygène qui remonte vers la surface, le premier étage. Tout système permettant d'injecter de manière contrôlée de l'air peut être utilisé. Par exemple, il est possible d'utiliser un compresseur ou une soufflante ou tout autre dispositif de compression. Dans un mode de réalisation particulier, le système d'aération forcée utilise l'oxygène atmosphérique. De manière à assurer une bonne répartition de l'oxygène dans le dispositif, le système d'aération forcée comprend un réseau de distribution réparti sur toute la surface du fond du dispositif. Par exemple, le système d'aération forcée comprend un réseau de tuyaux percés d'orifices de libération de l'oxygène, ledit réseau s'étendant sur le fond.

Dans un mode de réalisation particulier, le fond du dispositif comprend une ou plusieurs couches drainantes, de granulométrie comprise par exemple entre 10 et 30 mm. Le réseau de tuyaux d'alimentation en oxygène peut alors être disposé sous cette couche drainante. Dans un autre mode de réalisation, aucune couche drainante n'est prévue, le drainage étant réalisé grâce au matériau particulaire du second étage, dont la granulométrie est alors choisie pour permettre ledit drainage. Dans un mode de réalisation, un réseau de drain de récupération des eaux traitées est disposé à la base du filtre du deuxième étage, ou fond du dispositif, pour la phase (C) d'évacuation des eaux traitées, hors du dispositif de traitement. Selon l'invention, la récupération des eaux traitées se fait au moyen d'un drain de récupération situé à l'opposé du filtre en service (en fond et à l'extrémité de filtre), perpendiculairement au sens d'écoulement dans le filtre horizontal. Il est ainsi possible d'obtenir au sein d'un même filtre du second étage un écoulement vertical depuis le premier étage et un écoulement horizontal en direction de la zone du filtre dans laquelle est situé le système de collecte.

Le dispositif selon l'invention comporte deux séries de filtres en parallèle, destinées à fonctionner en alternance. Autrement dit, le premier étage et le second étage comportent chacun deux ou plus de deux filtres en parallèle. Dans ce cas, il deux systèmes de collecte sont prévus, disposés de part et d'autre du dispositif, de manière à permettre l'évacuation des eaux en deux endroits différents. Ainsi, en jouant sur les systèmes de collecte, il est possible de permettre un écoulement vertical et/ou horizontal au sein du second étage. Notamment, il est possible d'obtenir un écoulement vertical dans un premier filtre du second étage, et en forçant l'évacuation (C) par le système de collecte situé du côté opposé au premier filtre, obtenir un écoulement horizontal dans un deuxième filtre. En jouant par ailleurs sur l'aération des filtres, il est possible de maintenir le filtre subissant l'écoulement vertical en aérobie et le filtre subissant l'écoulement horizontal en anoxie. Ainsi, une nitrification a lieu dans le filtre en aérobie, subit d'une dénitrification dans le filtre en anoxie. On obtient ainsi, au sein d'un même dispositif de traitement une minéralisation poussée des boues, une dégradation biologique des matières, ou pollutions, dissoutes, et un traitement de l'azote global (c'est-à-dire une nitrification et une dénitrification).

Le dispositif selon l'invention peut également être utilisé de manière similaire pour la minéralisation des boues, qu'elles soient primaires ou secondaires. L'invention a donc également pour objet un procédé de minéralisation de boues, mettant en oeuvre le dispositif d'épuration des eaux usées selon l'invention, selon lequel on alimente le premier étage en eaux usées brutes et/ou boues, ledit procédé comprenant une phase (A) de minéralisation des boues/dépôts organiques qui s'accumulent à la surface du premier étage ; une phase (B) de dégradation aérobie de la pollution dissoute au niveau du second étage ; une phase (D) de dénitrification au niveau de second étage ; et une phase (C) d'évacuation des eaux traitées.

Il est aussi divulgué une utilisation d'un dispositif de traitement secondaire ou tertiaire d'eaux usées comprenant un étage à écoulement horizontal destiné à recevoir un effluent à traiter et un système d'aération forcée s'étendant préférentiellement sous ledit étage à écoulement horizontal, pour l'élimination au moins partielle de germes pathogènes dans ledit effluent.

L'invention sera mieux comprise à la lecture de la description qui suit et à l'examen des figures qui l'accompagnent. Celles-ci sont présentées à titre illustratif et nullement limitatif de l'invention. Les figures représentent :
Figure 1 : Une représentation schématique en coupe longitudinale d'un dispositif de traitement des eaux usées;
Figure 2 : Une représentation schématique en coupe longitudinale d'un dispositif de traitement des eaux usées selon un exemple de réalisation de l'invention ;
Figures 3 et 4 : Deux représentations schématiques du dispositif de traitement des eaux selon la figure 2, fonctionnant en mode alterné.

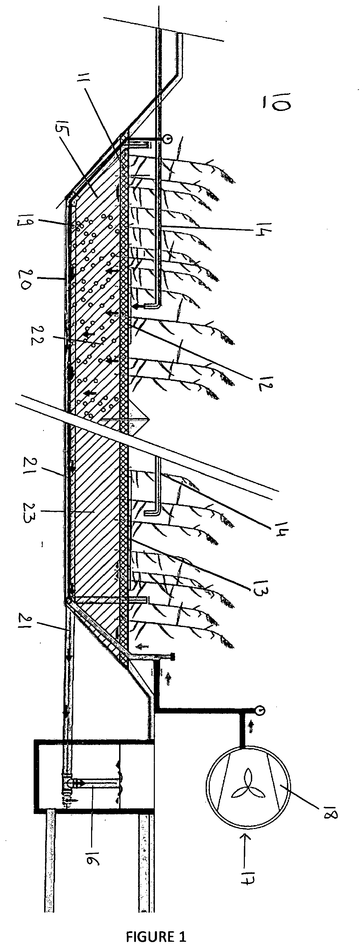

Un dispositif en dehors du champ de l'invention est représenté à la figure 1, qui comprend au moins deux filtres en parallèle. La configuration du dispositif ainsi représenté ne permet pas la dénitrification, mais seulement la nitrification.

Le dispositif 10 de traitement des eaux comprend plus précisément un premier étage 11 dont chacun des filtres 12, 13 peut être alimenté par bâchée au moyen d'une alimentation 14 en eaux usées brutes. La surface du premier étage 11, plantée de roseaux, retient/filtre les matières en suspension contribuant à la formation de la couche de boues et dont l'action mécanique des végétaux permet la perméabilité. Le premier étage comprend également, sous les roseaux, un matériau particulaire filtrant. Directement sous le matériau particulaire filtrant du premier étage s'étend le matériau particulaire filtrant du second étage 15. Le second étage 15 est saturé en eau : un regard de mise en charge 16 permet de maintenir le niveau d'eau.

Un système d'aération forcée 17 permet d'injecter de l'oxygène dans le dispositif de traitement 10. Plus précisément, le système d'aération forcée comprend un surpresseur 18 et un réseau de canalisations 19 s'étendant dans le fond 20 du dispositif de traitement des eaux 10. Par exemple, le réseau de canalisation 19 s'étend contre la géomembrane recouvrant la surface du sol dans lequel le dispositif est implanté. Le réseau de canalisation 19 est par exemple constitué d'une pluralité de tuyaux percés, pour permettre de libérer l'air apporté par le surpresseur 18. Les tuyaux sont par exemple espacés de 5 à 20 cm les uns des autres pour garantir une bonne répartition de l'oxygène sur toute la surface du dispositif. Un drain 21 s'étend également dans le fond 20 du dispositif 10 pour récupérer les eaux traitées et les drainer vers l'extérieur du dispositif.

Avec un tel dispositif 10 de traitement, les eaux usées dégrillées qui arrivent au niveau d'un des filtres 12, 13 du premier étage 11 percolent verticalement dans ledit filtre12. La minéralisation des boues s'accumulant à la surface du premier filtre 12 du premier étage 11 est favorisée par la bonne oxygénation dudit filtre 12. En effet, le système d'aération forcée 17 permet d'augmenter l'oxygénation du filtre 12 et optimise ainsi la minéralisation des boues. En outre, dans la mesure où le second filtre 13 est au repos, les boues qui ont pu s'accumuler à la surface du second filtre 13 lors d'une phase d'alimentation précédente peuvent continuer de se minéraliser et tout colmatage est ainsi évité.

Après avoir percolées verticalement dans le filtre 12 du premier étage 11, les eaux percolent verticalement dans un premier filtre 22 du second étage 15, situé sous le premier filtre 12 du premier étage 11. La dégradation biologique qui a commencé dans le filtre 12 du premier étage 11 se poursuit dans le filtre 22 du second étage 15, y compris la nitrification, favorisée par l'oxygénation importante dudit filtre au moyen du système d'aération forcée 17.

Les eaux traitées sont évacuées via le drain 21 s'étendant sur le fond du dispositif 10, le long des filtres 22 et 23 du second étage 15. Une pente peut être prévue au fond 20 du dispositif 10, de part et d'autre du drain 21, afin d'éviter les zones de stagnation.

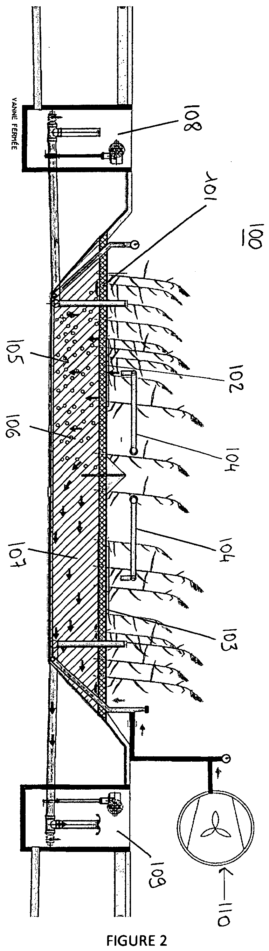

Les figures 2, 3 et 4 représentent un exemple de réalisation du dispositif selon l'invention, qui comprend également deux séries de filtres en parallèle.

Le dispositif 100 de traitement des eaux comprend également un premier étage 101, dont chacun des filtres 102, 103 peut être alimenté par bâchée au moyen d'une alimentation 104 en eaux usées brutes dégrillées. Un second étage 105, saturé en eau, est directement situé sous le premier étage 101. Deux regards de mise en charge 108, 109, disposés chacun à une extrémité d'un filtre 106, 107 du second étage 105 permet de maintenir le niveau d'eau.

Un système d'aération forcée 110, apte à fonctionner en alternance, permet d'injecter de l'oxygène dans le dispositif de traitement 100, depuis l'un et/ou l'autre des deux filtres 106, 107 du second étage 105. Par exemple, un système de vannes (non représenté) permet d'alimenter en oxygène alternativement un réseau de tuyaux s'étendant sous le premier filtre 106 du second étage 105 ou un réseau de tuyaux s'étendant sous le second filtre 107 dudit second étage 105.

Les regards de mise en charge 108, 109 permettent également de collecter les eaux traitées. Ces systèmes de collecte peuvent fonctionner de manière alternative, afin de récupérer les eaux traitées depuis l'un ou l'autre desdits systèmes.

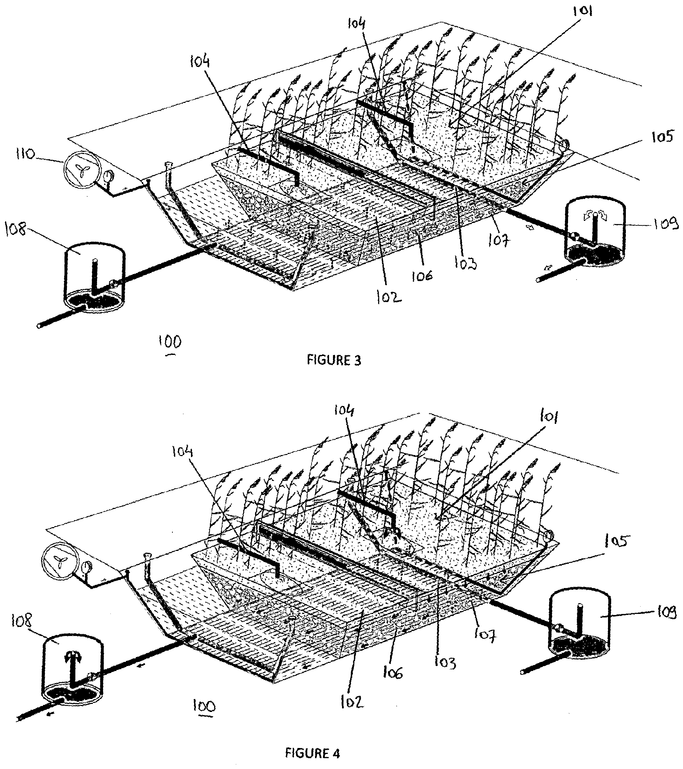

Le dispositif 100 peut avantageusement être utilisé comme décrit ici : Une bâchée d'effluent brut dégrillé est versée sur le premier filtre 102 du premier étage 101 (figures 2 et 3). Les eaux usées percolent verticalement en direction du premier filtre 106 du second étage 105. Là encore, la minéralisation des boues s'accumulant à la surface du premier filtre 102 est favorisée par la bonne oxygénation dudit filtre 102. Le second filtre 103 du premier étage 101 est, quant à lui, au repos.

Le système d'aération forcée 110 injecte avantageusement de l'oxygène uniquement au niveau du premier filtre 106 du premier étage. Ainsi, ledit premier filtre 106 est en conditions aérobie, tandis que le second filtre 107 est en conditions anoxiques.

Après avoir percolées verticalement dans le filtre 102 du premier étage 101, les eaux percolent verticalement dans le premier filtre 106 du second étage 105, situé sous le premier filtre 102 du premier étage 101. Les conditions au sein du premier filtre 106 du second étage 105 sont réunies pour permettre le traitement des pollutions dissoutes y compris la nitrification.

Le système de collecte 109 situé à l'opposé du premier filtre 106 du second étage 105 est en fonctionnement, tandis que le système de collecte 108 situé du côté dudit premier filtre 106 ne fonctionne pas (vanne fermée). Ainsi, pour être évacuées, les eaux traitées doivent transiter par le second filtre 107 du second étage 105, dans lequel elles vont percoler horizontalement. Le second filtre 107 étant en conditions anoxiques, la nitrification des nitrates peut alors avoir lieu. On obtient ainsi, en sortir de dispositif 100, un traitement de l'azote global.

Lors du cycle d'alimentation suivant (figure 4), c'est le second filtre 103 du premier étage 101 qui est alimenté, le premier filtre 101 étant quant à lui mis au repos. Le système d'aération forcée 110 change également de zone d'injection de l'oxygène, de manière à ce que le premier filtre 106 du second étage 105 se retrouve en conditions anoxiques, tandis que le second filtre 107 dudit second étage 105 est en conditions aérobies. De même, le système de collecte activé est inversé. Les eaux traitées sont évacuées par le système 108 situé à l'opposé du second filtre 107, de manière à ce que les eaux qui percolent verticalement dans le second filtre 107 percolent également horizontalement dans le premier filtre 106 avant d'être évacuées.

Il est ainsi possible d'alterner les cycles de phases d'aération actives et phases de repos dans les séries de filtres 102, 106 et 103, 107.

Selon l'invention, il est possible de prévoir plus de séries de filtres en parallèle, par exemple trois, quatre, etc., de manière notamment à espacer les temps d'activité de chacun des filtres.

## Revendications

1. Dispositif d'épuration d'eaux usées (10, 100) de type massif filtrant comprenant deux séries de filtres (12, 22, 13, 23 ; 102, 106, 103, 107) en parallèle, destinés à fonctionner en alternance, chaque série de filtres comprenant
- un premier étage (11, 101) à culture fixée librement drainé à écoulement vertical consistant en au moins un filtre planté apte à recevoir de l'effluent brut et à retenir les boues à la surface dudit filtre, le premier étage de chaque série de filtres pouvant être alimenté en alternance par bâchée, de sorte qu'à l'arrivée d'une bâchée d'effluent, l'eau se répartit à la surface du filtre alimenté, puis y percole verticalement de manière uniforme en direction du fond, tandis que des boues s'accumulent à la surface dudit filtre,
- un second étage (15, 105) à culture fixée saturé en eau à écoulement vertical et horizontal, le premier étage étant disposé directement au-dessus dudit second étage, de sorte que l'eau percolant à travers le premier étage arrive dans le second étage, ledit second étage comprenant des moyens de mise en charge (16, 108, 109) pour assurer le maintien du niveau d'eau,
- un système d'aération forcée (17, 110) apte à fonctionner de façon discontinue, comprenant un réseau de distribution s'étendant sous le second étage, réparti sur toute la surface du fond du dispositif, et apte à apporter de l'oxygène au premier et second étages, et
- un drain de récupération (21) des eaux traitées, disposé en fond et à une extrémité du filtre du deuxième étage perpendiculairement à un sens d'écoulement horizontal dans ledit filtre,
ledit dispositif comprenant deux systèmes de collecte (108, 109) de l'effluent traité disposés chacun au niveau du second étage d'une série de filtres différente, de part et d'autre dudit dispositif, et étant destinés à fonctionner en alternance,
les filtres des deux seconds étages étant adjacents et le dispositif pouvant être opéré de telle sorte que l'eau s'écoule verticalement au sein d'un des filtres et ensuite horizontalement au sein du filtre adjacent.

2. Dispositif d'épuration des eaux usées selon la revendication 1, dans lequel une épaisseur du premier étage est comprise entre 10 et 50 cm et/ou une épaisseur du second étage est comprise entre 100 et 200cm.

3. Dispositif d'épuration des eaux usées selon l'une des revendications précédentes, dans lequel le premier étage est un filtre planté de macrophytes, préférentiellement un filtre planté de roseaux.

4. Dispositif d'épuration des eaux usées selon l'une des revendications précédentes, dans lequel le système d'aération forcée est apte à fonctionner alternativement et/ou séquentiellement au niveau de l'un ou l'autre des filtres (106, 107) du second étage, de manière à alterner les conditions aérobies et anoxiques dans lesdits filtres.

5. Procédé de traitement des eaux usées ou de minéralisation des boues mettant en oeuvre le dispositif d'épuration des eaux usées selon l'une des revendications 1-4, selon lequel on alimente en alternance le premier étage d'une première série de filtres en effluent brut ou en boues, le premier étage d'une seconde série de filtres n'étant pas alimentée en effluent brut ou en boues, et inversement, et selon lequel le système d'aération forcée fonctionne de manière alternative ou séquentielle, de sorte que lorsque le second étage de la série de filtres alimentée en effluent brut ou en boues est alimenté en oxygène, le second étage de la série de filtres non alimentée en effluent brut ou en boues, n'est pas alimenté en oxygène de manière à créer des conditions anoxiques, et on collecte l'effluent traité avec les systèmes de collecte fonctionnant en alternance, ledit procédé comprenant
une phase (A) de minéralisation des boues qui s'accumulent à la surface du premier étage de la série de filtres alimentée en effluent brut ou en boues ;
une phase (B) de nitrification et de dégradation aérobie de la pollution dissoute au niveau du second étage de la série de filtres alimentée en effluent brut ou en boues et alimenté en oxygène par le système d'aération forcée ;
une phase (C) d'évacuation des eaux traitées,
ledit procédé comprenant, avant la phase (C) d'évacuation, une phase (D) de dénitrification au niveau du filtre du second étage en conditions anoxiques, et
selon lequel la phase (C) d'évacuation se fait de telle manière que l'effluent percole verticalement dans le second étage de la série de filtres alimentée en effluent brut ou en boues, depuis le premier étage qui est alimenté en effluent brut ou en boues, puis horizontalement dans le second étage de la série de filtres non alimentée, avant d'être récupéré par le drain de récupération puis évacué par le système de collecte de la série de filtre non-alimentée.

6. Procédé de traitement des eaux usées selon la revendication 5, dans lequel la phase (B) de dégradation aérobie de la pollution dissoute au niveau du second étage saturé et aéré s'accompagne d'une élimination au moins partielle des germes pathogènes présents dans l'effluent.

7. Procédé de traitement des eaux usées selon l'une des revendications 5 ou 6, selon lequel les filtres fonctionnent alternativement de manière à alterner les cycles de phases d'aération actives et de phases de repos.

## Patentansprüche

1. Abwasserreinigungsvorrichtung (10, 100) vom Typ Filterkörper, umfassend zwei parallele Filterreihen (12, 22, 13, 23; 102, 106, 103, 107), die alternierend arbeiten, wobei jede Filterreihe umfasst
- eine erste Stufe (11, 101) mit immobilisierter, frei entwässerter vertikaler Strömungskultur, bestehend aus wenigstens einem bepflanzten Filter, der geeignet ist, unbehandeltes Abwasser aufzunehmen und auf der Oberfläche des Filters den Schlamm zurückzuhalten, wobei die erste Stufe jeder Filterreihe alternierend von einem Tank versorgt werden kann, so dass bei Zulauf von einem Abwassertank das Wasser sich auf der Oberfläche des versorgten Filters verteilt, dann dort gleichmäßig in Richtung der Unterseite vertikal versickert, während der Schlamm sich auf der Oberfläche des Filters ansammelt,
- eine zweite Stufe (15, 105) mit immobilisierter Kultur, die mit vertikal oder horizontal strömenden Wasser gesättigt ist, wobei die erste Stufe direkt über der zweiten Stufe angeordnet ist, so dass das Sickerwasser durch die erste Stufe in die zweite Stufe gelangt, wobei die zweite Stufe Mittel zur Befüllung (16, 108, 109) zur Aufrechterhaltung des Wasserstands umfasst,
- ein Zwangsbelüftungssystem (17, 110), das diskontinuierlich arbeiten kann, umfassend ein Verteilungsnetz, das sich unter der zweiten Stufe erstreckt, über die gesamte Oberfläche der Unterseite der Vorrichtung verteilt und geeignet ist, Sauerstoff der ersten und zweiten Stufe zuzuführen, und
- eine Drainage zur Rückgewinnung (21) von behandeltem Wasser, die an der Unterseite und an einem Filterende der zweiten Stufe in Abhängigkeit der horizontalen Strömungsrichtung in dem Filter angeordnet ist,
wobei die Vorrichtung zwei Sammelsysteme (108, 109) des behandelten Abwassers umfasst, die jeweils auf Niveau der zweiten Stufe einer unterschiedlichen Filterreihe auf beiden Seiten der Vorrichtung verteilt sind und alternierend arbeiten sollen,
wobei die Filter der beiden zweiten Stufen aneinandergrenzen und die Vorrichtung derart betrieben werden kann, dass das Wasser senkrecht zu einem der Filter und dann horizontal zu dem benachbarten Filter fließt.

2. Abwasserreinigungsvorrichtung gemäß Anspruch 1, wobei die erste Stufe eine Dicke von 10 bis 50 cm und/oder die zweite Stufe eine Dicke von 100 bis 200 cm aufweist.

3. Abwasserreinigungsvorrichtung gemäß einem der vorhergehenden Ansprüche, wobei die erste Stufe ein mit Makrophyten bepflanzter Filter, vorzugsweise ein mit Schilf bepflanzter Filter ist.

4. Abwasserreinigungsvorrichtung gemäß einem der vorhergehenden Ansprüche, wobei das Zwangsbelüftungssystem alternierend und/oder sequenziell an dem einen oder anderen Filter (106, 107) der zweiten Stufe betrieben werden kann, um auf diese Weise aerobe und anoxische Bedingungen in den Filtern abwechselnd herzustellen.

5. Verfahren zur Abwasserbehandlung oder zur Mineralisierung von Schlamm, das die Abwasserreinigungsvorrichtung gemäß einem der Ansprüche 1 bis 4 verwendet, in dem abwechselnd die erste Stufe einer ersten Filterreihe mit unbehandeltem Abwasser oder Schlamm versorgt wird, wobei die erste Stufe einer zweiten Filterreihe mit unbehandeltem Abwasser oder Schlamm nicht versorgt wird, und umgekehrt, und in dem das Zwangsbelüftungssystem alternativ oder sequenziell arbeitet, so dass, wenn die zweite Stufe der mit unbehandeltem Abwasser oder Schlamm versorgten Filterreihe mit Sauerstoff versorgt wird, die zweite Stufe der mit unbehandeltem Abwasser oder Schlamm nicht versorgten Filterreihe nicht mit Sauerstoff versorgt wird, um anoxische Bedingungen zu schaffen, und behandeltes Abwasser mit den Sammelsystemen alternierend gesammelt wird, wobei das Verfahren umfasst
eine Phase (A) der Mineralisation von Schlamm, der sich an der Oberfläche der ersten Stufe der Filterreihe ansammelt, die mit unbehandeltem Abwasser oder Schlamm versorgt wird,
eine Phase (B) der Nitrifikation und des aeroben Abbaus der gelösten Schadstoffe auf Niveau der zweiten Stufe der Filterreihe, die mit unbehandeltem Abwasser oder Schlamm versorgt wird und mit Sauerstoff mithilfe des Zwangsbelüftungssystems versorgt wird;
eine Phase (C) der Ableitung des behandelten Wassers,
wobei das Verfahren, vor der Phase (C) der Ableitung, eine Phase (D) der Denitrifikation auf Niveau des Filters der zweiten Stufe unter anoxischen Bedingungen umfasst, und
wobei die Phase (C) der Ableitung in einer Weise erfolgt, dass das Abwasser vertikal in die zweite Stufe der Filterreihe, die mit unbehandeltem Abwasser oder Schlamm versorgt wird, von der ersten Stufe aus, die mit unbehandeltem Abwasser oder mit Schlamm versorgt wird, dann horizontal in die zweite Stufe der nicht versorgten Filterreihe sickert, bevor es über die Rückgewinnungsdrainage zurückgewonnen wird und dann mithilfe des Sammelsystems der nicht versorgten Filterreihe abgeleitet wird.

6. Verfahren zur Abwasserbehandlung gemäß Anspruch 5, wobei die Phase (B) des aeroben Abbaus der gelösten Schadstoffe auf Niveau der gesättigten und belüfteten zweiten Stufe wenigstens von einer partiellen Eliminierung von pathogenen Keimen begleitet ist, die im Abwasser vorhanden sind.

7. Verfahren zur Abwasserbehandlung gemäß einem der Ansprüche 5 oder 6, wobei die Filter abwechselnd arbeiten, um Phasen der aktiven Belüftung und Ruhephasen zyklisch abzuwechseln.

## Claims

1. A wastewater purification device (10, 100) of the filtering mass type comprising two series of filters (12, 22, 13, 23; 102, 106, 103, 107) in parallel, intended to operate alternately, each series of filters comprising:
- a first stage (11, 101) with fixed culture, freely drained with vertical flow consisting of at least one planted filter able to receive raw effluent and retain the sludge on the surface of said filter, the first stage of each series of filters which can be fed alternately by batch, so that on arrival of a batch of effluent, the water is distributed on the surface of the fed filter, then percolates vertically in a uniform manner towards the bottom, while sludge accumulates on the surface of said filter,
- a second stage (15, 105) with fixed culture, saturated with water with vertical and horizontal flow, the first stage being disposed directly above said second stage, so that the water percolating through the first stage arrives in the second stage, said second stage comprising loading means (16, 108, 109) to ensure that the water level is maintained,
- a forced aeration system (17, 110) able to operate discontinuously, comprising a distribution network extending under the second stage, distributed over the entire surface of the bottom of the device, and able to supply oxygen to the first and second stages, and
- a drain for recovering (21) treated water, disposed at the bottom and at one end of the filter of the second stage perpendicular to a horizontal flow direction in said filter,
said device comprising two collection systems (108, 109) of the treated effluent each disposed at the level of the second stage of a different series of filters, on either side of said device, and being intended to operate alternately,
the filters of the two second stages being adjacent and the device being able to be operated so that the water flows vertically within one of the filters and then horizontally within the adjacent filter.

2. The wastewater purification device according to claim 1, wherein a thickness of the first stage is comprised between 10 and 50 cm and/or a thickness of the second stage is comprised between 100 and 200 cm.

3. The wastewater purification device according to any of the preceding claims, wherein the first stage is a filter planted with macrophytes, preferably a filter planted with reeds.

4. The wastewater purification device according to any of the preceding claims, wherein the forced aeration system is able to operate alternately and/or sequentially at the level of either of the filters (106, 107) of the second stage, so as to alternate the aerobic and anoxic conditions in said filters.

5. A process for treating wastewater or mineralizing sludge implementing the wastewater purification device according to any of claims 1-4, according to which the first stage of a first series of filters is alternately fed with raw effluent or sludge, the first stage of a second series of filters not being fed with raw effluent or sludge, and vice versa, and according to which the forced aeration system operates alternately or sequentially, so that when the second stage of the series of filters fed with raw effluent or sludge is fed with oxygen, the second stage of the series of filters not fed with raw effluent or sludge is not fed with oxygen so as to create anoxic conditions, and the treated effluent is collected with the collection systems operating alternately, said process comprising:
a phase (A) of mineralization of the sludge that accumulates on the surface of the first stage of the series of filters fed with raw effluent or sludge;
a phase (B) of aerobic nitrification and degradation of the pollution dissolved at the level of the second stage of the series of filters fed with raw effluent or sludge and fed with oxygen by the forced aeration system;
a phase (C) of discharge of the treated water,
said process comprising, before the discharge phase (C), a denitrification phase (D) at the level of the filter of the second stage in anoxic conditions, and
according to which the discharge phase (C) is carried out in such a way that the effluent percolates vertically in the second stage of the series of filters fed with raw effluent or sludge, from the first stage which is fed with raw effluent or sludge, then horizontally into the second stage of the unfed series of filters, before being recovered by the recovery drain and then discharged by the collection system of the unfed series of filters.

6. The wastewater treatment process according to claim 5, wherein the phase (B) of aerobic degradation of the pollution dissolved at the level of the saturated and aerated second stage is accompanied by at least partial elimination of the pathogenic germs present in the effluent.

7. The wastewater treatment process according to any of claims 5 or 6, according to which the filters alternately operate so as to alternate the cycles of active aeration phases and rest phases.
